# FASCICULE DE BREVET EUROPEEN

(11) **EP 2 072 204 B1**
(45) Date de publication et mention de la délivrance du brevet: **02.05.2012**
(21) Numéro de dépôt: 08171835.5
(22) Date de dépôt: 16.12.2008
(51) Int. Cl.: B29C 33/00, B29D 30/06

(54) **Moule pour la vulcanisation d'une ébauche crue de pneumatique**
Form für die Vulkanisierung eines Reifenrohlings
Mould for vulcanisation of a raw blank of a tyre

(30) Priorité: 21.12.2007 FR 0760283
(43) Date de publication de la demande: 24.06.2009
(73) Titulaire: Société de Technologie Michelin, 63000 Clermont-Ferrand (FR); MICHELIN Recherche et Technique S.A., 1763 Granges-Paccot (CH)
(72) Inventeur: Delbet, Cédric, 63400 Chamalières (FR); Lauwers, Olivier, 63270 Yronde et Buron (FR); Alegre, Gérard, 63100 Clermont-Ferrand (FR); Merino-Lopez, José, 63200 Riom (FR); Desvignes, Jean-Claude, 63360 Gerzat (FR)
(74) Mandataire: Lasson, Cédric Y. M.

(56) Documents cités:
- WO-A-01/02147
- US-A- 1 733 064
- US-A1- 2002 142 056
- US-A1- 2005 224 151
- US-A1- 2005 253 304
- US-A1- 2007 077 320

## Description

La présente invention concerne le domaine technique des pneumatiques.

Un pneumatique comprend généralement une bande de roulement de révolution autour d'un axe de rotation du pneumatique. Cette bande de roulement comporte notamment des sculptures assurant une bonne adhérence du pneumatique.

L'usure de la bande de roulement provoque l'arasement des sculptures et donc une baisse des performances d'adhérence du pneumatique.

Dans le cas notamment d'un pneumatique pour véhicule de type poids lourd, il est connu de former dans la masse de la gomme formant la bande de roulement des canaux destinés notamment à limiter la perte d'adhérence du pneumatique lors de l'usure de la bande de roulement. En effet, l'usure de la gomme de la bande de roulement provoque l'affleurement des canaux à la surface de cette bande de roulement. Les canaux affleurants forment des rainures susceptibles de remplacer au moins partiellement les sculptures initiales de la bande de roulement arasées par l'usure.

Il est connu de fabriquer un pneumatique en vulcanisant une ébauche crue dans un moule comprenant :
- deux organes axiaux supérieur et inférieur (encore appelés « coquilles »), portant chacun une surface de moulage d'un flanc du pneumatique, et
- des segments radiaux portant chacun une surface de moulage de la bande de roulement du pneumatique (encore appelée « garniture »).

Au moins un organe de moulage de flanc est déplaçable axialement entre une position de moulage du flanc et une position de démoulage du pneumatique, de manière en particulier à permettre l'extraction dudit pneumatique.

Pour former des canaux tels qu'évoqués ci-dessus, le moule comprend généralement, comme cela est décrit par exemple dans JP2002307442A, deux ensembles supérieur et inférieur d'organes de moulage des canaux. Chaque ensemble d'organes de moulage des canaux est déplaçable axialement entre une position de moulage des canaux et une position de démoulage des canaux.

Dans le moule décrit dans JP2002307442A, les ensembles supérieur et inférieur d'organes de moulage des canaux sont solidaires respectivement des organes axiaux supérieur et inférieur. Ainsi, le déplacement des organes axiaux entre leurs positions de moulage du flanc et de démoulage du pneumatique provoque le déplacement des ensembles d'organes de moulage des canaux entre leurs positions de moulage et de démoulage des canaux.

Le moule décrit dans JP2002307442A comprend de plus des moyens de guidage dans le moule des organes de moulage de canaux. Ces moyens de guidage comprennent des glissières femelles ménagées dans les segments radiaux du moule.

Chaque segment du moule décrit dans JP2002307442A comprend deux moitiés supérieure et inférieure reliées respectivement aux deux organes axiaux supérieur et inférieur de moulage de flanc par des moyens autorisant un débattement axial relatif des moitiés de segment par rapport aux organes axiaux de moulage de flanc.

Les glissières femelles de guidage de l'ensemble supérieur d'organes de moulage de canaux sont ménagées dans la moitié supérieure des segments et les glissières femelles de guidage de l'ensemble inférieur d'organes de moulage de canaux sont ménagées dans la moitié inférieure des segments.

Le débattement axial relatif de chaque moitié de segment par rapport à l'organe axial de moulage de flanc correspondant est limité de façon à empêcher le déboîtement des organes de moulage de canaux par rapport à leurs glissières de guidage lorsque que ces organes de moulage de canaux sont déplacés de leur position de moulage vers leur position de démoulage.

Ainsi, lors de l'ouverture du moule décrit dans JP2002307442A, le déplacement axial des organes axiaux de moulage de flanc permet de retirer du pneumatique vulcanisé les organes de moulage de canaux sans déboîter ceux-ci des glissières de guidage.

Cependant, pour ouvrir le moule, il faut déplacer conjointement chaque organe axial de moulage de flanc avec la moitié de segment radial auquel il est relié. De plus, lors de la fermeture du moule, il faut veiller à ce que la jonction entre les moitiés de segments radiaux soit bien étanche. Ceci rend la manipulation du moule relativement complexe.

L'invention a notamment pour but de fournir un moule plus facile à manipuler que celui décrit dans JP2002307442A.

Un autre moule pour la vulcanisation d'une ébauche crue de pneumatique est décrit dans la demande US 2002/0142056 A1. A cet effet, l'invention a pour objet un moule pour la vulcanisation d'une ébauche crue de pneumatique du type comprenant :
- deux organes axiaux portant chacun une surface de moulage d'un flanc du pneumatique, au moins un des organes axiaux étant déplaçable entre une position de moulage du flanc et une position de démoulage du pneumatique,
- au moins un organe de moulage d'un canal dans une bande de roulement du pneumatique, déplaçable entre une position de moulage du canal et une position de démoulage du canal,
- des moyens de déplacement axial de l'organe de moulage du canal entre ses positions de moulage et de démoulage,
caractérisé en ce que les moyens de déplacement axial comprennent des moyens libérables de liaison entre l'organe de moulage du canal et l'organe axial.

Grâce au moule selon l'invention, le déplacement axial de l'organe axial peut être réalisé indépendamment de celui de l'organe de moulage du canal tout en conservant la possibilité de maintenir les organes de moulage des canaux dans les moyens de guidage. En effet, lors de l'ouverture du moule, l'organe axial peut tout d'abord être déplacé conjointement avec l'organe de moulage du canal, notamment pour retirer les organes de moulage du pneumatique, puis être déplacé indépendamment de l'organe de moulage, après avoir libéré les moyens de liaison, notamment pour pouvoir extraire le pneumatique du moule.

Selon une caractéristique optionnelle du moule selon l'invention, le moule comprend des moyens de guidage de chaque organe de moulage, ces moyens de guidage comprenant au moins une première glissière femelle dans laquelle est monté coulissant l'organe de moulage formant une première glissière mâle, la première glissière femelle étant ménagée dans un segment radial portant au moins une surface de moulage d'une bande de roulement du pneumatique.

Les moyens de guidage permettent un positionnement précis des organes de moulage des canaux par rapport à la bande de roulement du pneumatique.

Selon d'autres caractéristiques optionnelles du moule selon l'invention :
Le moule comprend :
   - au moins un organe mobile formant support pour chaque organe de moulage, et
   - des moyens de guidage axial de l'organe formant support comprenant au moins une paire de deuxièmes glissières mâle et femelle portées par l'organe formant support et le segment radial.

Les moyens de liaison libérables comprennent au moins deux organes complémentaires de verrouillage formant pêne et gâche portés par l'organe formant support et l'organe axial.

Avantageusement, l'organe formant support comprend des moyens de limitation de sa course axiale empêchant un déboîtement de chaque organe de moulage par rapport à la première glissière femelle lorsque l'organe de moulage du canal est déplacé de sa position de moulage vers sa position de démoulage.

En empêchant le déboîtement de chaque organe de moulage par rapport à la première glissière femelle, les organes de moulage des canaux sont maintenus dans les premières glissières femelles même en position de démoulage. Il ne sera pas nécessaire de ré-emboîter les organes de moulage des canaux dans leurs glissières de guidage lors d'une prochaine réutilisation du moule.

Selon une caractéristique optionnelle du moule selon l'invention, les moyens de limitation de la course de l'organe formant support comprennent au moins deux épaulements complémentaires ménagés dans la deuxième glissière femelle et l'organe formant support.

Avantageusement, le moule comprend des moyens de guidage de chaque organe de moulage mobiles par rapport au segment radial et des moyens de couplage temporaire des moyens de guidage mobiles avec l'organe formant support.

Les moyens de guidage mobiles et les moyens de couplage temporaire permettent de guider et maintenir les organes de moulage sur une portion de la course de l'organe formant support. Les moyens de guidage mobiles évitent ainsi le flambage des organes de moulage lors du déplacement de ces organes de moulage de leur position de démoulage vers leur position de moulage.

Selon d'autres caractéristiques optionnelles du moule selon l'invention :
- Les moyens de guidage mobiles comprennent au moins une troisième glissière femelle montée coulissante autour de la deuxième glissière mâle.
- Les moyens de couplage temporaire comprennent au moins deux butées axiales opposées, solidaires des moyens de guidage mobiles, destinées à coopérer avec au moins deux butées axiales opposées, solidaires de l'organe formant support, complémentaires des butées solidaires de moyens de guidage mobiles.

Dans un mode de réalisation de l'invention, le moule comprend au moins des premier et deuxième organes de moulage portés respectivement par des premier et deuxième organes formant supports disposés sensiblement symétriquement de part et d'autre d'un plan médian axial du pneumatique, le pneumatique étant considéré dans le moule.

Selon d'autres caractéristiques optionnelles de ce mode de réalisation de l'invention:
- La deuxième glissière femelle est portée par le segment radial et est commune aux premier et deuxième organes formant supports.
- Le moule comprend des premier et deuxième organes axiaux disposés sensiblement symétriquement de part et d'autre du plan médian axial, le premier organe axial pouvant être relié au premier organe formant support grâce aux moyens de liaison libérables, chaque segment radial comprenant :
   o une partie fixe solidaire axialement du deuxième organe formant support,
   o une partie mobile axialement par rapport à la partie fixe, la partie mobile portant une garniture de moulage de bande de roulement,
le moule comprenant de plus des moyens de solidarisation axiale du deuxième organe axial avec la partie mobile du segment radial.

Dans un mode de réalisation du moule selon l'invention, tous les organes de moulage du segment radial sont portés par l'organe formant support.

L'invention sera mieux comprise à la lecture de la description qui va suivre, donnée uniquement à titre d'exemple non limitatif et faite en se référant aux dessins dans lesquels :
- la figure 1 est une vue en coupe d'un moule de vulcanisation d'un pneumatique, selon un premier mode de réalisation de l'invention ;
- la figure 2 est une vue en coupe d'une partie d'un segment radial du moule de la figure 1 ;
- la figure 3 est une vue en perspective d'une surface de moulage d'une bande de roulement du pneumatique ;
- les figures 4 à 7 sont des vues analogues à la figure 1 montrant le moule dans différentes étapes de fermeture du moule ;
- les figures 8 à 11 sont des vues analogues à la figure 1 montrant le moule dans différentes étapes d'ouverture du moule ;
- la figure 12 est une vue analogue à celle de la figure 6 d'un moule selon un deuxième mode de réalisation de l'invention ;
- la figure 13 est une vue en perspective d'un segment radial du moule de la figure 12.

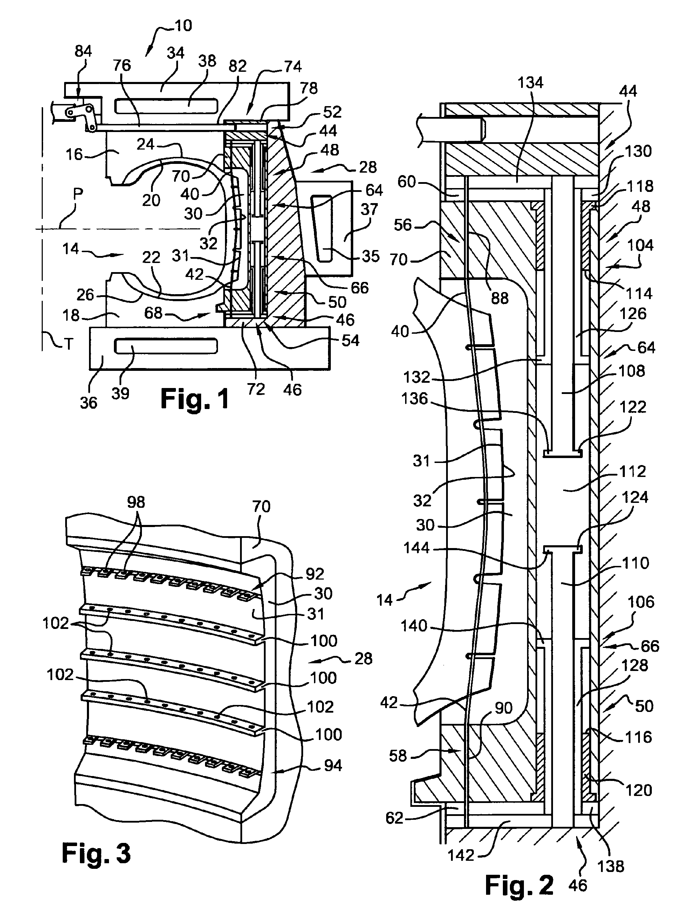

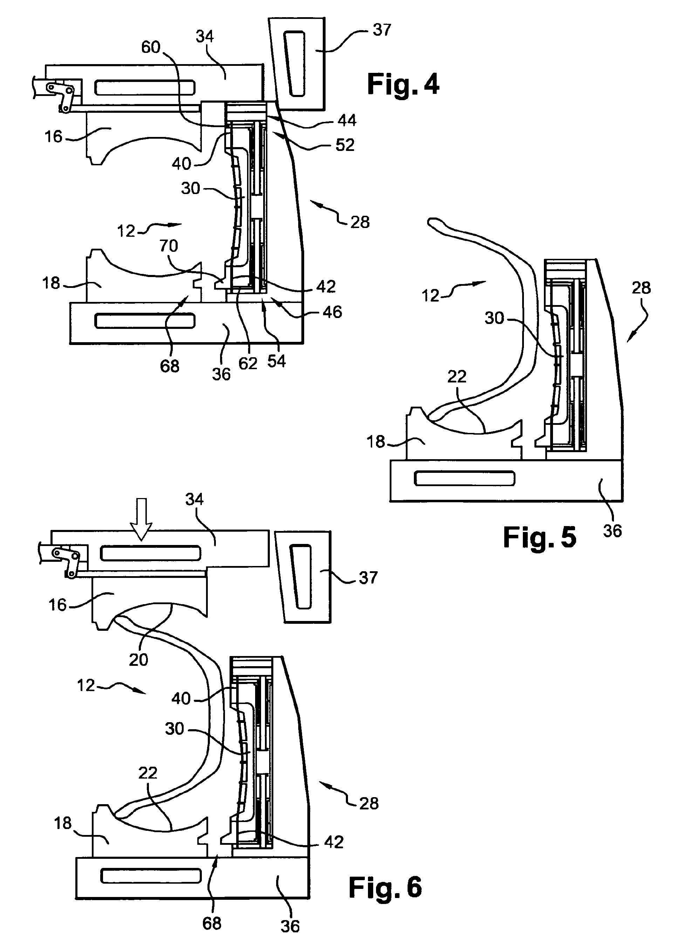

On a représenté sur les figures 1 à 11 un moule selon le premier mode de réalisation de l'invention et désigné par la référence générale 10. Ce moule 10 est utilisé pour la vulcanisation d'une ébauche crue 12 représentée sur les figures 5 à 7 en vue d'obtenir un pneumatique vulcanisé 14 représenté sur les figures 1, 2 et 8 à 11.

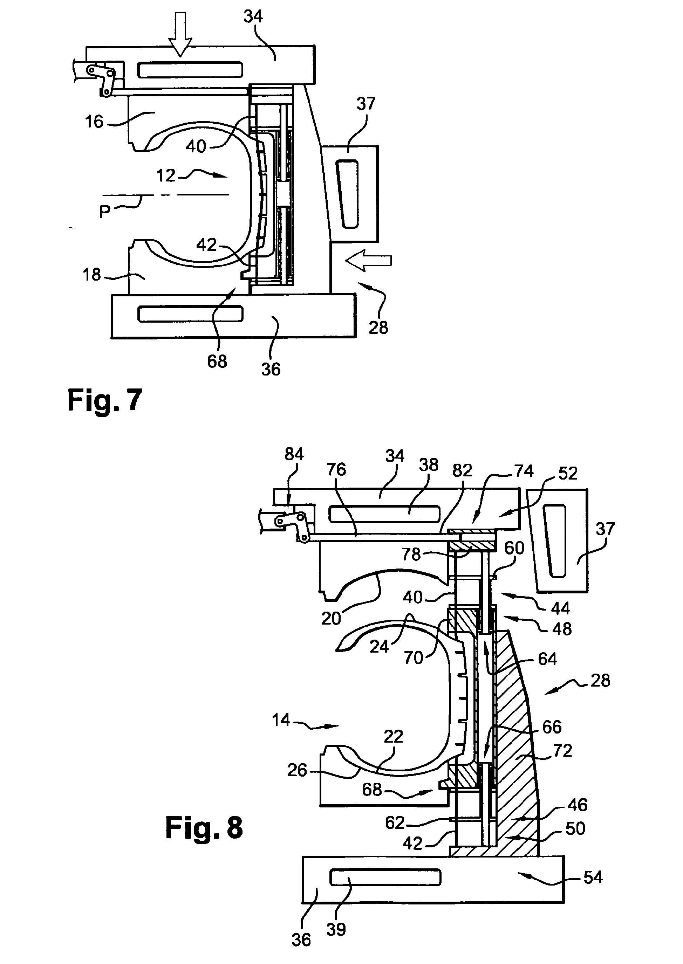

Le moule 10 a une forme générale de révolution autour d'un axe X, représenté sur la figure 1, coïncidant avec l'axe de révolution du pneumatique 14 lorsque celui-ci est logé dans le moule comme cela est représenté aux figures 1 et 7.

Le moule 10 comprend des premier et deuxième organes axiaux 16, 18 disposés sensiblement symétriquement de part et d'autre d'un plan médian axial P du pneumatique 14 lorsque celui-ci est dans le moule, comme cela est représenté sur les figures 1, 7 et 9. Le plan P est sensiblement perpendiculaire à l'axe X. Chaque organe axial 16, 18 porte une surface de moulage 20, 22 d'un flanc correspondant 24, 26 du pneumatique 14. Chaque organe axial 16, 18 est déplaçable entre une position de moulage du flanc correspondant 24, 26 et de démoulage du pneumatique 14.

En référence aux figures 1 à 3, le moule 10 comprend également des segments radiaux 28, aptes à se déplacer radialement et portant une garniture 30 dont la surface radialement interne 31 comporte des reliefs de moulage d'une bande de roulement 32 du pneumatique 14.

En outre, le moule 10 comprend des premier et deuxième plateaux 34, 36 de serrage axial respectivement des premier et deuxième organes axiaux 16, 18 ainsi qu'une couronne 37 de serrage radial des segments radiaux 28. Les premier et deuxième plateaux 34, 36 et la couronne 37 comprennent des canaux annulaires 38, 39, 35 de circulation d'un fluide caloporteur. En l'espèce, les segments radiaux 28 glissent radialement sur une surface supérieure du deuxième plateau 36.

De plus, le moule 10 comprend des premier et deuxième ensembles de premiers et deuxièmes organes 40, 42 de moulage de canaux dans la bande de roulement 32 du pneumatique 14. Ces deux ensembles sont disposés sensiblement symétriquement de part et d'autre du plan P. En l'espèce, les organes 40, 42 sont des aiguilles flexibles en acier préférentiellement recouvertes d'un revêtement anti-adhérent.

En référence aux figures 1 et 8, le moule 10 comprend également des premier et deuxième organes mobiles formant supports 44, 46 pour les organes 40, 42 disposés sensiblement symétriquement de part et d'autre du plan P ainsi que des premier et deuxième moyens 48, 50 de guidage axial respectivement des premier et deuxième supports 44, 46. Les deux supports mobiles 44, 46 portent respectivement les deux ensembles d'organes de moulage 40, 42. En l'espèce, le deuxième organe support 46 est solidaires du pied du segment 28.

Le moule 10 comprend des premiers et deuxièmes moyens de déplacement axial 52, 54 aptes à déplacer axialement les premier et deuxième ensembles d'organes 40, 42 entre une position de moulage des canaux, représentée aux figures 1, 2 et 4 à 7, et une position de démoulage des canaux, représentée aux figures 8 à 10.

Le moule 10 comprend également des premiers et deuxièmes moyens 56, 58 de guidage des premier et deuxième ensemble d'organes de moulage 40, 42 entre leurs positions de moulage et de démoulage ainsi que des premiers et deuxièmes moyens mobiles 60, 62 de guidage de chaque organe de moulage 40, 42 par rapport au segment radial 28.

En outre, le moule 10 comprend des premiers et deuxièmes moyens 64, 66 de couplage mécanique temporaire respectivement des premiers et deuxièmes moyens de guidage mobiles 60, 62 respectivement avec les premier et deuxième supports 44, 46.

Enfin, le moule 10 comprend des moyens 68 de solidarisation axiale du deuxième organe axial 18 avec une partie 70 du segment radial 28 portant la garniture de moulage 30. La partie 70 est mobile par rapport à une partie fixe 72 du segment radial 28. Dans le mode de réalisation servant de support à la présente description, la partie fixe 72 est solidaire axialement du deuxième support 46 portant le deuxième organe de moulage 42.

Les premiers moyens de déplacement 52 comprennent des moyens libérables 74 de liaison entre le premier organe axial 16 et les premiers organes de moulage 40. En l'espèce, le premier organe axial 16 peut être relié au premier support 44 grâce aux moyens de liaison libérables 74.

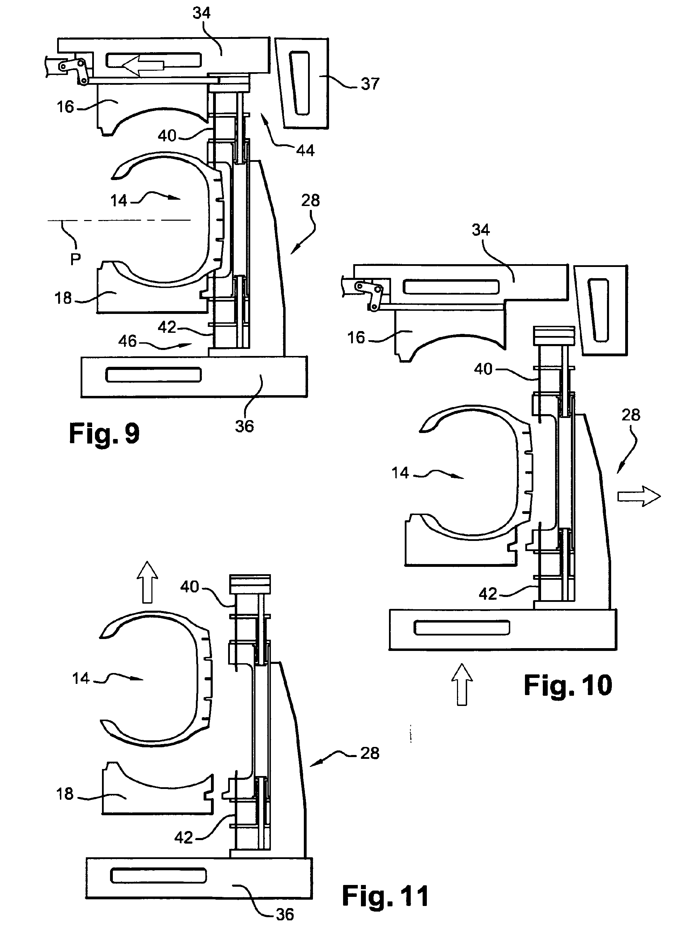

Les moyens libérables 74 comprennent un organe 76 formant pêne, porté par le premier organe axial 16, ainsi qu'un organe 78 formant gâche complémentaire de l'organe 76, porté par le premier support 44. Le pêne 76 est déplaçable, dans un logement 82 ménagé dans le premier organe axial 16, entre :
- une position de verrouillage, représentée sur les figures 1, 2 et 8 et 9 dans laquelle le pêne 76 est emboîté dans la gâche 78, et
- une position de déverrouillage, représentée sur les figures 10 et 11 dans laquelle le pêne 76 est séparé de la gâche 78.

Les moyens libérables 74 comprennent également un mécanisme à bascule 84 de déplacement du pêne 76 entre ses positions de verrouillage et de déverrouillage.

En référence à la figure 2, les premiers et deuxièmes moyens de guidage 56, 58 comprennent des glissières femelles 88, 90 dans lesquelles sont montés coulissants les premiers et deuxièmes organes de moulage 40, 42. Ces organes de moulage 40, 42 forment donc des glissières mâles coopérant avec les glissières femelles 88, 90. Les glissières femelles 88, 90 sont ménagées dans le segment radial 28, en l'espèce dans la partie mobile 70.

En référence à la figure 3, la surface 31 de moulage de la garniture 30 de la bande de roulement 32 comporte un ou plusieurs jeux de lamelles 92 s'étendant radialement et disposées circonférentielement de manière continue ou discontinue. Des canaux 98 de guidage des organes de moulage 40, 42 sont ménagés dans les lamelles 92. La surface 31 de la garniture de moulage 30 comprend également des cordons circonférentiels 100 continus ou discontinus s'étendant radialement et destinés au moulage des sillons dans la bande de roulement 32. Des canaux de guidage 102 des organes de moulage 40, 42 sont ménagés dans les cordons continus 100. Cet arrangement particulier tel que décrit ci-dessus à titre illustratif peut être modifié en fonction des besoins particuliers liés à la conception de la bande de roulement.

Ainsi, les glissières femelles 88, 90 et les canaux 98, 102 permettent de guider et maintenir les organes de moulage 40, 42 pendant le déplacement axial desdits organes de moulage.

En référence à la figure 2, les premier et deuxième supports 44, 46 comprennent respectivement des premiers et deuxièmes moyens 104, 106 de limitation de leur course axiale, empêchant un déboîtement respectivement des organes de moulage 40, 42 par rapport à leurs glissières femelles de guidage 88, 90 lorsque ces organes de moulage 40, 42 sont déplacés de leurs positions de moulage vers leurs positions de démoulage.

Les premiers et deuxièmes moyens de guidage axial 48, 50 comprennent respectivement des glissières mâles 108, 110 et femelles 112. Chaque glissière femelle est commune à deux glissières mâles 108, 110. Les glissières mâles 108, 110 sont portées respectivement par les supports 44, 46. Les glissières femelles 112 sont portées par le segment radial 28 et sont communes aux premier et deuxième supports 44, 46.

Les moyens de limitation de la course 104, 106 des premier et deuxième supports 44, 46 comprennent des premier et deuxième épaulements 114, 116 ménagés dans chaque glissière femelle 112. En l'espèce, chaque épaulement 114, 116 est porté par une bague 118, 120 insérée dans la glissière femelle 112. Les moyens de limitation de la course 104, 106 comprennent également des épaulements 122, 124, complémentaires des épaulements 114, 116, ménagés en l'espèce à l'extrémité glissières mâles 108, 110 portées par les premier et deuxième supports 44, 46.

Les moyens de guidage mobiles 60, 62 comprennent des glissières femelles 126, 128 montées coulissantes chacune autour d'une glissière mâle 108, 110.

Les premiers moyens de couplage temporaire 64 comprennent deux butées axiales opposées 130, 132 solidaires des premiers moyens de guidage mobiles 60 destinées à coopérer avec deux butées axiales opposées 134, 136, solidaires du premier support 44, complémentaires des butées 130, 132. L'épaulement 122 forme la butée 136.

De même, les deuxièmes moyens de couplage temporaire 66 comprennent deux butées axiales 138, 140 solidaires des deuxièmes moyens de guidage mobiles 62 destinées à coopérer avec deux butées axiales opposées 142, 144, solidaires du deuxième support 46, complémentaires des butées 138, 140. L'épaulement 124 forme la butée 144.

On décrira ci-dessous les principaux aspects du fonctionnement du moule 10 selon le premier mode de réalisation de l'invention.

En préalable à l'introduction de l'ébauche de pneumatique, il convient de placer les premier et deuxième organes de moulage dans la position de moulage des canaux. A cet effet, en référence à la figure 4, on actionne les premiers et deuxièmes moyens de déplacement axial 52, 54 de manière à rapprocher axialement les premier et deuxième supports 44, 46. Les premier et deuxième organes de moulage, guidés par respectivement les premiers et deuxièmes moyens de guidage mobile 60, 62, les premiers et deuxièmes moyens de guidage 88, 90, et les canaux de guidage 98 et 102, se mettent en place dans la garniture 30.

En l'espèce, cette opération est pilotée par l'abaissement dans la direction axiale du premier plateau 34 qui fait office de moyen de déplacement axial. Les segments 28 sont en position reculée, ce qui a pour effet de désengager le moyen de solidarisation axiale 68 de la partie mobile 70. Dans son mouvement, le premier plateau 34 repousse axialement le premier organe support 44, ce qui a pour effet de faire pénétrer les premiers organes de moulage dans la garniture 30. En poursuivant sa course, le premier organe support 44 entraîne à son tour la partie mobile du segment 70 portant la garniture 30, ce qui a pour effet de faire pénétrer les deuxièmes organes de moulage 42 dans la garniture 30.

Simultanément, les moyens de guidage mobiles 60, 62 se replient jusqu'à ce qu'un contact mécanique soit établi respectivement entre le premier support 44 avec la butée 134, la butée 134 avec la butée 130, la butée 130 avec la partie mobile 70, la partie mobile 70 avec la butée 138, la butée 138 avec la butée 142 et la butée 142 avec le deuxième support 46.

On relève alors le premier plateau 34 de manière à libérer l'espace nécessaire à l'introduction de l'ébauche 12 de pneumatique. Dans le même temps, on abaisse le deuxième organe axial 18 pour le mettre en contact avec le deuxième plateau 36. Le moule 10 est alors prêt à recevoir l'ébauche 12 de pneumatique.

Afin de vulcaniser l'ébauche crue 12 dans le moule 10, on place cette dernière en appui sur la surface 22 du deuxième organe axial 18 comme cela est représenté à la figure 5.

Puis, en référence aux figures 5 à 7, on galbe l'ébauche 12 :
- en rapprochant axialement les organe axial 16 et plateau de serrage 34 du plan P de sorte à faire coopérer les premier et deuxième organes axiaux 16, 18 avec les segments radiaux 28 et les première et deuxième surfaces de moulage 20, 22 avec les surfaces de l'ébauche 12 destinées à former les flancs 24, 26 du pneumatique 14, et
- en rapprochant radialement les segments radiaux 28 de l'axe X de sorte à faire coopérer la surface de moulage 30 avec la surface de l'ébauche 12 destinée à former la bande de roulement 32 du pneumatique 14 et à relier chaque segment 28 au deuxième organe axial 18 grâce aux moyens de liaison 68, et
- en gonflant une membrane de cuisson (non représentée) située dans l'espace intérieur de l'ébauche du pneumatique qui a pour effet de mettre en pression la surface de l'ébauche contre les surfaces de moulage 20, 22, 31. Cette mise en pression a également pour effet de faire pénétrer les éléments en relief de la sculpture 92, 100, 40, 42 dans la matrice élastomérique de la bande de roulement, avec pour résultat le moulage des canaux.

Ensuite, on serre radialement les segments radiaux 28 avec la couronne de serrage 37 en déplaçant cette dernière axialement vers le plan P contre les segments radiaux 28.

Puis, on vulcanise l'ébauche 12 pour former le pneumatique 14. En l'espèce, la vulcanisation est réalisée en faisant circuler un fluide caloporteur dans les canaux de circulation annulaire 38, 39, 35 ainsi que dans l'espace intérieur de la membrane.

A l'issue de la vulcanisation de l'ébauche 12, les organes de moulage 40, 42 doivent être retirés afin de démouler le pneumatique 14. Pour ce faire, et comme représenté à la figure 1, on verrouille les moyens de liaison 74 de façon à relier d'une part, le support 44 et les organes de moulage 40 qu'il porte, avec d'autre part, le premier organe axial 16.

Puis, on éloigne axialement la couronne de serrage 37.

Ensuite, en référence à la figure 8, on éloigne axialement du plan P les plateaux 34 et organe axial 16. Le déplacement axial de l'organe axial 16 a tout d'abord pour effet de déplacer axialement le support 44 par rapport au segment radial 28 jusque dans une position de coopération des butées complémentaires 132 et 136. Puis, le déplacement axial de l'organe axial 16 entraîne le déplacement axial des premiers moyens de guidage mobiles 60 jusque dans la position de démoulage des premiers organes de moulage des canaux 40 représentée à la figure 8.

Par ailleurs, on éloigne axialement le plateau 36 relativement au plan P. En l'espèce, ce mouvement relatif s'opère en relevant le deuxième organe axial 18, ce qui a pour effet d'entraîner la partie mobile 70 du segment 28, laquelle est rendue solidaire de l'élément axial 18 par l'intermédiaire des moyens 68. Le deuxième support 46 étant solidaire du segment 28, lequel segment glisse sur la surface du plateau 36, le déplacement axial relatif du plan P par rapport au plateau 36 a tout d'abord pour effet de déplacer la partie mobile 70 du segment radial 28 par rapport au support 46 jusque dans une position de coopération des butées complémentaires 140 et 144. Ce mouvement entraîne le déplacement axial des deuxièmes moyens de guidage mobiles 62 jusque dans la position de démoulage des deuxièmes organes 42 de moulage des canaux tel que représenté à la figure 8.

La position de démoulage des organes de moulage 40, 42 est déterminée par les moyens de limitation de course 104, 106. En l'espèce, la position de démoulage est atteinte lorsque les épaulements 114, 116 coopèrent avec les butées 132, 140 des moyens de guidage mobiles 60, 62 elles-mêmes coopérant avec les butées 136, 144 des supports 44, 46. Il en résulte que les organes de moulage 40, 42 ne sortent pas des glissières 88, 90 portées par la partie mobile 70.

Puis, en référence à la figure 9, on libère les moyens de liaison 74.

En référence à la figure 10, on écarte alors axialement les premier plateau 34 et organe axial 16 du plan P. On peut alors écarter radialement les segments radiaux 28 car les organes de moulage 40, 42 ont été retirés de la bande de roulement 32.

Puis, on extrait le pneumatique vulcanisé 14 du moule 10 comme cela est représenté à la figure 11.

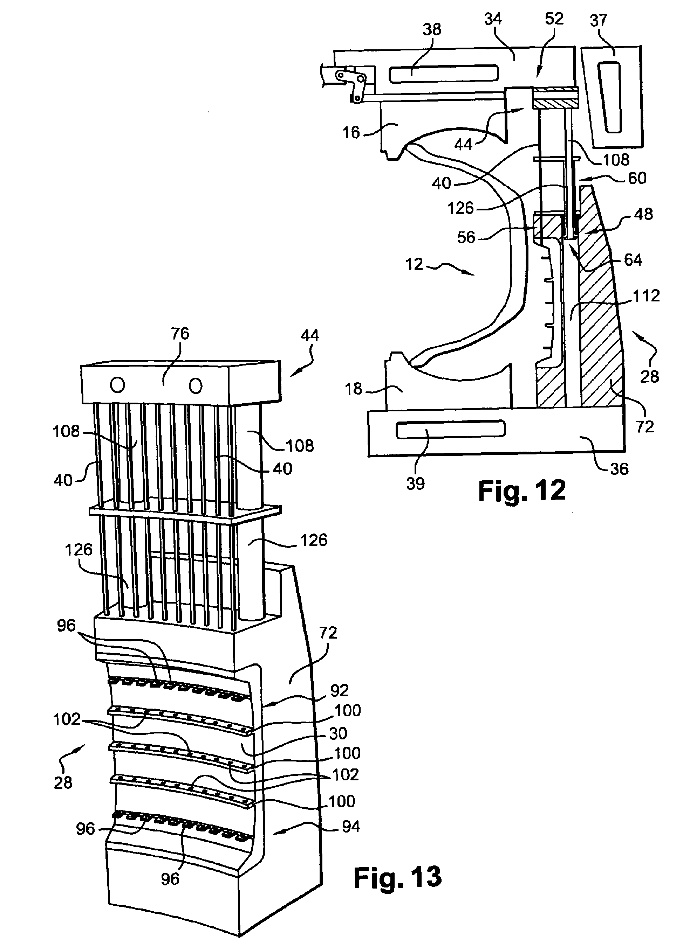

On a représenté sur les figures 12 et 13 un moule selon un deuxième mode de réalisation de l'invention. Les éléments analogues à ceux représentés sur les figures précédentes sont désignés par des références identiques.

A la différence du moule 10 selon le premier mode de réalisation, le moule 10 selon le deuxième mode de réalisation ne comprend pas les deuxièmes organes de moulage 42 et les moyens et organes qui y sont associés. Ainsi, tous les organes de moulage 40 du segment radial 28 sont portés par l'organe formant support 44.

En outre, chaque segment radial 28 comprend une unique partie fixe 72 par rapport au segment 28.

Les premiers organes de moulage 40 du moule 10 selon le deuxième mode de réalisation traversent axialement la bande de roulement 32 et présentent une longueur plus grande que celle des premiers organes de moulage 40 du moule 10 selon le premier mode de réalisation qui ne traversent axialement que la moitié de la bande de roulement 32.

Afin de pouvoir déplacer les organes 40 entre leurs position de moulage et de démoulage, les glissières mâles 108 des premiers moyens de guidage axial 48 et les glissières femelles 126 des premiers moyens de guidage mobiles présentent des longueurs adaptées à la course nécessaire au déplacement des organes de moulage 40 entre leurs positions de moulage et de démoulage.

## Revendications

1. Moule (10) pour la vulcanisation d'une ébauche crue (12) de pneumatique du type comprenant :
- deux organes axiaux(16, 18), portant chacun une surface de moulage d'un flanc du pneumatique, au moins un des organes axiaux étant déplaçable entre une position de moulage du flanc et une position de démoulage du pneumatique (14),
- au moins un organe de moulage (40, 42) d'un canal dans une bande de roulement du pneumatique (14), déplaçable entre une position de moulage du canal et une position de démoulage du canal,
- des moyens de déplacement (52, 54) axial de l'organe de moulage du canal entre ses positions de moulage et de démoulage,
**caractérisé en ce que** les moyens de déplacement axial comprennent des moyens libérables (74) de liaison entre l'organe de moulage (40) du canal et l'organe axial (16).

2. Moule (10) selon la revendication 1, comprenant des moyens (56, 58) de guidage de chaque organe de moulage, ces moyens de guidage comprenant au moins une première glissière femelle (88, 90) dans laquelle est monté coulissant l'organe de moulage (40, 42) formant une première glissière mâle, la première glissière femelle (88, 90) étant ménagée dans un segment radial (28) portant au moins une surface de moulage d'une bande de roulement (32) du pneumatique.

3. Moule (10) selon la revendication 2, comprenant :
- au moins un organe mobile formant support (44, 46) pour chaque organe de moulage (40, 42), et
- des moyens (48, 50) de guidage axial de l'organe formant support (44, 46) comprenant au moins une paire de deuxièmes glissières mâle (108, 110) et femelle (112) portées par l'organe formant support (44, 46) et le segment radial (28).

4. Moule (10) selon la revendication 3, dans lequel les moyens de liaison libérables (74) comprennent au moins deux organes complémentaires de verrouillage formant pêne (76) et gâche (78) portés par l'organe formant support (44) et l'organe axial (16).

5. Moule (10) selon la revendication 3 ou 4, dans lequel l'organe formant support (44 ,46) comprend des moyens de limitation (104, 106) de sa course axiale empêchant un déboîtement de chaque organe de moulage (40, 42) par rapport à la première glissière femelle (88, 90) lorsque l'organe de moulage du canal est déplacé de sa position de moulage vers sa position de démoulage.

6. Moule (10) selon la revendication 5, dans lequel les moyens de limitation de la course (104, 106) de l'organe formant support comprennent au moins deux épaulements (114, 116) complémentaires ménagés dans la deuxième glissière femelle (112) et l'organe formant support (44, 46).

7. Moule (10) selon l'une quelconque des revendications 3 à 6, comprenant des moyens (60, 62) de guidage de chaque organe de moulage (40, 42), mobiles par rapport au segment radial (28) et des moyens (64, 66) de couplage temporaire des moyens de guidage mobiles (60, 62) avec l'organe formant support (44, 46).

8. Moule (10) selon la revendication 7, dans lequel les moyens de guidage mobiles (60, 62) comprennent au moins une troisième glissière femelle (126, 128) montée coulissante autour de la deuxième glissière mâle (108, 110).

9. Moule (10) selon la revendication 7 ou 8, dans lequel les moyens de couplage temporaire (64, 66) comprennent au moins deux butées axiales opposées (130, 132, 138, 140), solidaires des moyens de guidage mobiles, destinées à coopérer avec au moins deux butées axiales opposées (134, 136, 142, 144), solidaire de l'organe formant support (44, 46), complémentaires des butées solidaires de moyens de guidage mobiles.

10. Moule (10) selon l'une quelconque des revendications précédentes, comprenant au moins des premier et deuxième organes de moulage (40, 42) portés respectivement par des premier et deuxième organes formant supports (44, 46) disposés sensiblement symétriquement de part et d'autre d'un plan médian axial (P) du pneumatique (14), le pneumatique étant considéré dans le moule.

11. Moule (10) selon les revendications 2 et 10 prises ensemble, dans lequel la deuxième glissière femelle (112) est portée par le segment radial (28) et est commune aux premier et deuxième organes formant supports (44, 46).

12. Moule (10) selon la revendication 11, comprenant des premier et deuxième organes axiaux (16, 18) disposés sensiblement symétriquement de part et d'autre du plan médian axial (P), le premier organe axial (16) pouvant être relié au premier organe formant support grâce aux moyens de liaison libérables (74), chaque segment radial (28) comprenant :
- une partie fixe (72) solidaire axialement du deuxième organe formant support (46),
- une partie mobile (70) axialement par rapport à la partie fixe (72), la partie mobile (70) portant une garniture de moulage (30) de la bande de roulement (32), le moule comprenant de plus des moyens de solidarisation (68) axiale du deuxième organe axial (18) avec la partie mobile (70) du segment radial (28).

13. Moule selon l'une quelconque des revendications 2 à 9, dans lequel tous les organes de moulage (40) du segment radial (28) sont portés par l'organe formant support (44).

## Claims

1. Mould (10) for the vulcanization of a green tyre blank (12), of the type comprising:
- two axial members (16, 18), each having a surface for moulding a sidewall of the tyre, at least one of the axial members being able to move between a position for moulding the sidewall and a position for demoulding the tyre (14);
- at least one member (40, 42) for moulding a channel in the tread of the tyre (14), which can move between a position for moulding the channel and a position for demoulding the channel; and
- axial displacement means (52, 54) for moving the channel moulding member axially between its moulding and demoulding positions,
**characterized in that** the axial displacement means comprise releaseable means (74) for linkage between the channel moulding member (40) and the axial member (16).

2. Mould (10) according to Claim 1, comprising means (56, 58) for guiding each moulding member, these guiding means comprising at least a first female slideway (88, 90) in which the moulding member (40, 42) forming a first male slideway is slidably mounted, the first female slideway (88, 90) being provided in a radial segment (28) having at least one surface for moulding the tread (32) of the tyre.

3. Mould (10) according to Claim 2, comprising:
- at least one movable supporting member (44, 46) for each moulding member (40, 42); and
- means (48, 50) for axially guiding the supporting member (44, 46), comprising at least one pair of second male (108, 110) and female (112) slideways supported by the supporting member (44, 46) and the radial segment (28).

4. Mould (10) according to Claim 3, in which the releaseable linkage means (74) comprise at least two complementary blocking members forming a bolt (76) and latch (78) that are supported by the supporting member (44) and the axial member (16).

5. Mould (10) according to Claim 3 or 4, in which the supporting member (44, 46) comprises means (104, 106) for limiting its axial stroke, preventing each moulding member (40, 42) from coming out of the first female slideway (88, 90) when the channel moulding member is moved from its moulding position to its demoulding position.

6. Mould (10) according to Claim 5, in which the stroke-limiting means (104, 106) of the supporting member comprise at least two complementary shoulders (114, 116) provided in the second female slideway (112) and the supporting member (44, 46).

7. Mould (10) according to any one of Claims 3 to 6, comprising means (60, 62) for guiding each moulding member (40, 42), which can move relative to the radial segment (28), and means (64, 66) for temporarily coupling the movable guiding means (60, 62) to the supporting member (44, 46).

8. Mould (10) according to Claim 7, in which the movable guiding means (60, 62) comprise at least a third female slideway (126, 128) slideably mounted around the second male slideway (108, 110).

9. Mould (10) according to Claim 7 or 8, in which the temporary coupling means (64, 66) comprise at least two opposed axial stops (130, 132, 138, 140), fastened to the movable guiding means and intended to cooperate with at least two opposed axial stops (134, 136, 142, 144), which are fastened to the supporting member (44, 46) and are complementary to the stops fastened to the movable guiding means.

10. Mould (10) according to any one of the preceding claims, comprising at least first and second moulding members (40, 42) supported respectively by first and second supporting members (44, 46) placed substantially symmetrically on either side of an axial mid-plane (P) of the tyre (14), the tyre being considered in the mould.

11. Mould (10) according to Claims 2 and 10 taken together, in which the second female slideway (112) is supported by the radial segment (28) and is common to the first and second supporting members (44, 46).

12. Mould (10) according to Claim 11, comprising first and second axial members (16, 18) placed substantially symmetrically on either side of the axial mid-plane (P), the first axial member (16) being able to be connected to the first supporting member by virtue of the releaseable linkage means (74), each radial segment (28) comprising:
- a stationary part (72) fastened axially to the second supporting member (46); and
- a movable part (70) that can move axially relative to the stationary part (72), the movable part (70) supporting a liner (30) for moulding the tread (32), the mould additionally comprising means (68) for axially fastening the second axial member (18) to the movable part (70) of the radial segment (28).

13. Mould according to any one of Claims 2 to 9, in which all the moulding members (40) of the radial segment (28) are supported by the supporting member (44).

## Patentansprüche

1. Gießform (10) für die Vulkanisierung eines Luftreifenrohlings (12) des Typs, der umfasst:
- zwei axiale Organe (16, 18), wovon jedes eine Oberfläche zum Gießen einer Flanke des Luftreifens trägt, wobei wenigstens eines der axialen Organe zwischen einer Position zum Gießen der Flanke und einer Position zum Auswerfen des Luftreifens (14) aus der Form verlagerbar ist,
- wenigstens ein Organ (40, 42) zum Gießen eines Kanals in einem Laufband des Luftreifens (14), das zwischen einer Position zum Gießen des Kanals und einer Position zum Auswerfen des Kanals aus der Form verlagerbar ist,
- Mittel (52, 54) für die axiale Verlagerung des Kanalgießorgans zwischen seiner Gieß- und seiner Formauswurfposition,
**dadurch gekennzeichnet, dass** die Axialverlagerungsmittel freiggebbare Mittel (74) für die Verbindung zwischen dem Kanalgießorgan (40) und dem axialen Organ (16) umfassen.

2. Gießform (10) nach Anspruch 1, die Mittel (56, 58) zum Führen jedes Gießorgans umfasst, wobei diese Führungsmittel wenigstens eine erste Buchsengleitschiene (88, 90), in der das Gießformorgan (40, 42), das eine erste Steckgleitschiene bildet, gleitend angebracht ist, umfassen, wobei die erste Buchsengleitschiene (88, 90) in einem radialen Segment (28) ausgebildet ist, das wenigstens eine Gießoberfläche eines Laufbandes (32) des Luftreifens trägt.

3. Gießform (10) nach Anspruch 2, die Folgendes umfasst:
- wenigstens ein bewegliches Organ (44, 46), das einen Träger für jedes Gießorgan (40, 42) bildet, und
- Mittel (48, 50) zur axialen Führung des einen Träger bildenden Organs (44, 46), die wenigstens ein Paar zweiter Steckgleitschienen (108, 110) und Buchsengleitschienen (112) umfassen, die von dem einen Träger bildenden Organ (44, 46) und dem radialen Segment (28) getragen werden.

4. Gießform (10) nach Anspruch 3, wobei die freigebbaren Verbindungsmittel (74) wenigstens zwei komplementäre Verriegelungsorgane umfassen, die einen Riegel (76) und einen Schließhaken (78) bilden, die von dem einen Träger (44) bildenden Organ und dem axialen Organ (16) getragen werden.

5. Gießform (10) nach Anspruch 3 oder 4, wobei das einen Träger bildende Organ (44, 46) Mittel (104, 106) für die Begrenzung seiner axialen Bahn umfasst, die ein Ausscheren jedes Gießorgans (40, 42) in Bezug auf die erste Buchsengleitschiene (88, 90) verhindern, wenn das Kanalgießorgan aus seiner Gießposition in seine Formauswurfposition verlagert wird.

6. Gießform (10) nach Anspruch 5, wobei die Mittel (104, 106) zum Begrenzen der Bahn des einen Träger bildenden Organs wenigstens zwei komplementäre Schultern (114, 116) umfassen, die in der zweiten Buchsengleitschiene (112) bzw. in dem einen Träger bildenden Organ (44, 46) ausgebildet sind.

7. Gießform (10) nach einem der Ansprüche 3 bis 6, die Mittel (60, 62) zum Führen jedes Gießorgans (40, 42), die in Bezug auf das radiale Segment (28) beweglich sind, und Mittel (64, 66) zum vorübergehenden Koppeln der beweglichen Führungsmittel (60, 62) mit dem einen Träger bildenden Organ (44, 46) umfasst.

8. Gießform (10) nach Anspruch 7, wobei die beweglichen Führungsmittel (60, 62) wenigstens eine dritte Buchsengleitschiene (126, 128) umfassen, die um die zweite Steckgleitschiene (108, 110) gleitend angebracht ist.

9. Gießform (10) nach Anspruch 7 oder 8, wobei die Mittel (64, 66) zum vorübergehenden Koppeln wenigstens zwei gegenüberliegende axiale Anschläge (130, 132, 138, 140) umfassen, die mit den beweglichen Führungsmitteln verbunden sind und dazu bestimmt sind, mit wenigstens zwei gegenüberliegenden axialen Anschlägen (134, 136, 142, 144) zusammenzuwirken, die mit dem einen Träger bildenden Organ (44, 46) verbunden sind und zu den festen Anschlägen der beweglichen Führungsmittel komplementär sind.

10. Gießform (10) nach einem der vorhergehenden Ansprüche, die wenigstens ein erstes und ein zweites Gießorgan (40, 42) umfasst, die von dem ersten bzw. dem zweiten einen Träger bildenden Organ (44, 46) getragen werden und im Wesentlichen symmetrisch beiderseits einer axialen Medianebene (P) des Luftreifens (14) angeordnet sind, wenn der Luftreifen in der Gießform betrachtet wird.

11. Gießform (10) nach den Ansprüchen 2 und 10 zusammengenommen, wobei die zweite Buchsengleitschiene (112) von dem radialen Segment (28) getragen wird und dem ersten und dem zweiten einen Träger bildenden Organ (44, 46) gemeinsam ist.

12. Gießform (10) nach Anspruch 11, die ein erstes und ein zweites axiales Organ (16, 18) umfasst, die im Wesentlichen symmetrisch beiderseits der axialen Medianebene (P) angeordnet sind, wobei das erste axiale Organ (16) mit dem ersten einen Träger bildenden Organ kraft der freiggebbaren Verbindungsmittel (74) verbunden sein kann, wobei jedes radiale Segment (28) Folgendes umfasst:
- einen festen Teil (72), der mit dem zweiten einen Träger bildenden Organ (46) axial verbunden ist,
- einen Teil (70), der in Bezug auf den festen Teil (72) axial beweglich ist, wobei der bewegliche Teil (70) eine Gießausrüstung (30) für das Laufband (32) trägt, wobei die Gießform außerdem Mittel (68) für die axiale Befestigung des zweiten axialen Organs (18) an dem beweglichen Teil (70) des radialen Segments (28) umfasst.

13. Gießform nach einem der Ansprüche 2 bis 9, wobei sämtliche Gießorgane (40) des radialen Segments (28) von dem einen Träger bildenden Organ (44) getragen werden.
